(19) Europäisches Patentamt
European Patent Office
Office européen des brevets

(11) EP 1 518 875 B1

(12) EUROPÄISCHE PATENTSCHRIFT

(45) Veröffentlichungstag und Bekanntmachung des Hinweises auf die Patenterteilung:
**14.11.2012 Patentblatt 2012/46**

(51) Int Cl.:
***C08G 59/18*** *(2006.01)* ***C09D 163/00*** *(2006.01)*

(21) Anmeldenummer: **04020966.0**

(22) Anmeldetag: **03.09.2004**

(54) **Härter für Überzugsmassen**

Curing agent for a coating composition

Agent durcisseur pour une composition de revêtement

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.09.2003 DE 10342502**

(43) Veröffentlichungstag der Anmeldung:
**30.03.2005 Patentblatt 2005/13**

(73) Patentinhaber: **Cognis IP Management GmbH**
**40589 Düsseldorf (DE)**

(72) Erfinder:
- **Birnbrich, Paul, Dr.**
  **42719 Solingen (DE)**
- **Roloff, Thorsten, Dr.**
  **40597 Düsseldorf (DE)**
- **Sabbadini, Giorgio, Dr.**
  **20017 Rho (IT)**
- **Thomas, Hans-Josef**
  **41352 Korschenbroich (DE)**

(56) Entgegenhaltungen:
**WO-A1-97/31962 US-A- 4 608 405**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 518 875 B1

## Beschreibung

### Gebiet der Erfindung

Die Erfindung betrifft Überzugsmassen mit geringerer Schrumpfungsneigung. Diese Überzugsmassen sind erhältlich durch Umsetzung von Epoxidharzen und speziellen erfindungsgemäßen Härtern, wobei diese Härter erhältlich sind, indem eine Mischung von epoxidiertem Polyalkylenoxid, einer epoxidierten aromatischen Hydroxyverbindung und einer aromatischen Hydroxyverbindung zu einem Zwischenprodukt umsetzt und dieses Zwischenprodukt anschließend mit einem Polyamin umsetzt wie in den Ansprüchen beschrieben.

### Stand der Technik

US-A-4,608,405 beschreibt Härter für Epoxidharze. Diese Härter basieren auf epoxidierten Polyolen mit aromatischen und aliphatischen Strukturelementen, wobei nahezu alle Epoxidgruppen mit einem Polyamin zu einem Zwischenprodukt umgesetzt werden und wobei anschließend die primären Amingruppen des Zwischenproduktes mit einem Monoepoxid oder einer Monocarbonsäure zum Endprodukt umgesetzt werden. Dieses Endprodukt stellt einen Härter für wasserbasierte Epoxidharzsysteme dar.

### Beschreibung der Erfindung

Aufgabe der vorliegenden Erfindung war es, Härter für wasserbasierte Epoxidharzsysteme zur Verfügung zu stellen, bei deren Einsatz bei der Umsetzung mit Epoxidharzen Überzugsmassen bzw. Beschichtungen entstehen, die sich durch eine besonders geringe Schrumpfungsneigung auszeichnen.

Darüber hinaus sollten diese Härter die Eigenschaft haben, in Wasser selbstemulgierend zu sein.

Eine weitere Aufgabe war es, daß diese Härter in Wasser bzw. wässrigen Systemen zugesetzte flüssige Epoxidharze emulgieren können sollten.

Eine weitere Aufgabe war es, Härter für wasserbasierte Epoxidharzsysteme bereitzustellen, die sich durch eine gute Pigmentbenetzung auszeichnen.

Eine weitere Aufgabe war es, Härter für wasserbasierte Epoxidharzsysteme bereitzustellen, bei deren Einsatz bei der Umsetzung mit Epoxidharzen Überzugsmassen bzw. Beschichtungen entstehen, die sich durch schnelle Klebefreiheit oder Tack-free Zeit auszeichnen.

Eine weitere Aufgabe war es, Härter für wasserbasierte Epoxidharzsysteme bereitzustellen, bei deren Einsatz bei der Umsetzung mit Epoxidharzen Überzugsmassen bzw. Beschichtungen entstehen, die sich durch genügend lange Verarbeitungszeit, der sogenannten Topfzeit, auszeichnen. Dabei sollte das Ende der Verarbeitungszeit an einen deutlichen Viskositätsanstieg der Mischung erkennbar sein.

Eine weitere Aufgabe war es, Härter für wasserbasierte Epoxidharzsysteme bereitzustellen, die mit Epoxidharzen in dünner Schicht gute Klarlacke bilden.

Eine weitere Aufgabe war es, Härter für wasserbasierte Epoxidharzsysteme bereitzustellen, die nach kurzer Trocknungszeit eine deutliche Härteentwicklung zeigen.

Überraschenderweise wurde nun gefunden, daß Überzugsmassen, die erhältlich sind durch Umsetzung von Epoxidharzen und speziellen Härtern wie in den Ansprüchen beschrieben, wobei diese Härter erhältlich sind, indem man eine Mischung von epoxidierten Polyalkylenoxiden, epoxidierten aromatischen Hydroxyverbindungen und aromatischen Hydroxyverbindungen zu einem Zwischenprodukt umsetzt und dieses Zwischenprodukt anschließend mit Polyamin umsetzt, diese Anforderungen in jeder Hinsicht in ausgezeichneter Weise erfüllen.

Gegenstand der Erfindung sind zunächst Härter für wasserbasierte Epoxidharzsysteme, wobei diese Härter erhältlich sind, indem man eine Mischung von

(A) mindestens einem epoxidierten Polypropylenoxide ,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F

zu einem Zwischenprodukt umsetzt und dieses Zwischenprodukt anschließend mit einem Polyamin (E) umsetzt.

Im Hinblick auf die ganz ausgezeichneten Eigenschaften der erfindungsgemäßen Härter sei insbesondere auf Folgendes hingewiesen:

- Die Schrumpfungsneigung der unter Einsatz der erfindungsgemäßen Härter und Epoxidharzen zugänglichen ausgehärteten Massen, gemessen in Fußbodenüberzugsmassen bei 23°C und 50% relativer Luftfeuchtigkeit gemäß

Tabelle 2 des Beispielteils der vorliegenden Anmeldung, beträgt weniger als 3%, vorzugsweise weniger als 1,8%, besonders bevorzugt weniger als 0,9%.

- Die Pigmentbenetzung bei Einsatz der erfindungsgemäßen Härter ist derart, daß in Fußbodenüberzugsmassen wie in Tabelle 2 des Beispielteils der vorliegenden Anmeldung beschrieben, ein Verhältnis von Füllstoff zu Bindemittel oberhalb von 4,1:1 erreicht wird.
- Lacke, die unter Einsatz der erfindungsgemäßen Härter und Epoxidharzen zugänglich sind, sind bis zu Schichtdicken von 0,3mm klar und farblos. Es sind also unter Einsatz der erfindungsgemäßen Härter gute Klarlacke bis zu Schichtdicken von 0,3mm zugänglich.
- Die Klebefreiheit, auch als Tack-free Zeit bezeichnet, von Klarlacken, die unter Einsatz der erfindungsgemäßen Härter zugänglich sind, ist ausgezeichnet. Klarlacke entsprechend den Klarlackrezepturen gemäß Tabelle 1 des Beispielteils der vorliegenden Anmeldung haben die Eigenschaft, daß 3 Stunden nach der Auftragung des Klarlacks bei Raumtemperatur auf den Lackfilm aufgestreute kleine Glaskugeln oder Glasstaub nicht mehr auf dem Lackfilm anhaften und ohne weiteres mittels eines Pinsels entfernbar sind.
- Die Verarbeitungszeiten (Topfzeiten) von Klarlacken, die unter Einsatz der erfindungsgemäßen Härter zugänglich sind, ist ausgezeichnet. Mit Klarlackrezepturen auf Basis der erfindungsgemäßen Härter gemäß Tabelle 1 des Beispielteils der vorliegenden Anmeldung ist ein Klarlackauftrag noch nach 45 Minuten problemlos möglich, wobei ein klarer, farbloser transparenter Lack erhalten wird. Das Ende der Verarbeitungszeit (Topfzeit) ist durch einen deutlichen Viskositätsanstieg der Mischung gekennzeichnet und leicht daran zu erkennen, daß die Viskosität um mehr als das 3-fache gegenüber der Anfangsviskosität ansteigt.
- Ausgehärtete Massen, die unter Einsatz der erfindungsgemäßen Härter und Epoxidharzen zugänglich sind, weisen die Eigenschaft auf, daß bereits nach 1-tägiger Trocknung bei 20 °C bei 0,1mm dicken Lackfilmen entsprechend den Rezepturen gemäß Tabelle 1 des Beispielteils der vorliegenden Anmeldung eine Pendelhärte nach König (DIN 53157) von mehr als 170 erreicht wird.
- Die Härteentwicklung der unter Einsatz der erfindungsgemäßen Härter und Epoxidharzen zugänglichen ausgehärteten Massen, gemessen in Fußbodenüberzugsmassen gemäß Tabelle 2 des Beispielteils der vorliegenden Anmeldung beträgt nach 3-tägiger Aushärtung bei 8°C eine Shore D Härte (gemessen nach DIN 53505) über 40.

Ein weiterer Erfindungsgegenstand ist die Verwendung der erfindungsgemäßen Härter zur Herstellung von Klarlacken, Beschichtungsmassen und dergleichen.

Verbindungen (A)

Unter **epoxidierten Polypropylenoxiden** werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird .

Die Verbindungen (A) können einzeln oder im Gemisch miteinander eingesetzt werden.

Verbindungen (B)

Unter **Bisphenol-A-Epoxiden** werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert . Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Shell.

Die Molelulargewichte der eingesetzten Bisphenol-A-epoxide liegen vorzugsweise im Bereich von 380 bis 3000

Unter **Bisphenol-F-Epoxiden** werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert . Diese Verbindungen sind daher auch unter der Bezeichnung Bisphenol-F-Diglycidylether oder allgemein als Bisphenol F Epoxidharze bekannt.

Die Molelulargewichte der eingesetzten Bisphenol-F-epoxide liegen vorzugsweise im Bereich von 350 bis 3000.

Die Verbindungen (B) können einzeln oder im Gemisch miteinander eingesetzt werden.

Verbindungen (C)

**Bisphenol-A** ist dem Fachmann einschlägig bekannt und wird durch folgende Formel charakterisiert:

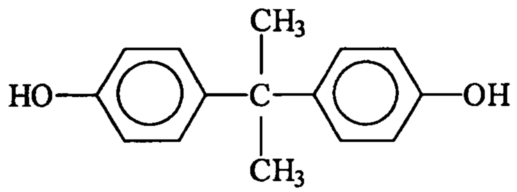

Bisphenol-A

**Bisphenol-F** ist dem Fachmann ebenfalls einschlägig bekannt.

Die Verbindungen (C) können einzeln oder im Gemisch miteinander eingesetzt werden.

Verbindungen (D)

In einer Ausführungsform werden zur Herstellung des Zwischenproduktes, das anschließend mit den Polyaminen (E) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

Die Verbindungen (D) können einzeln oder im Gemisch miteinander eingesetzt werden.

Der Klarheit halber sei festgestellt: Ein weiterer Erfindungsgegenstand sind dementsprechend Härter für wasserbasierte Epoxidharzsysteme, wobei diese Härter erhältlich sind, indem man eine Mischung von

(A) mindestens einem epoxidierten der Polypropylenoxide,
(B) mindestens einer epoxidierten aromatischen Hydroxyverbindung ausgewählt aus der Gruppe der Bisphenol-A-Epoxide und der Bisphenol-F-Epoxide,
(C) mindestens einer aromatischen Hydroxyverbindung, ausgewählt aus der Gruppe Bisphenol-A und Bisphenol-F und
(D) mindestens einer Verbindungen, ausgewählt aus der Gruppe der Triglycidylether von Triolen und der Diglycidylether von Diolen

zu einem Zwischenprodukt umsetzt und dieses Zwischenprodukt anschließend mit einem Polyamin (E) umsetzt.

Verbindungen (E)

Als **Polyamine** kommen im Rahmen der vorliegenden Erfindung Diethylentriamin .

Die Verbindungen (E) Diethylentriamin können einzeln oder im Gemisch miteinander eingesetzt werden.

Zur Herstellung des Zwischenproduktes

In einer Ausführungsform setzt man bei der Herstellung des Zwischenproduktes die Verbindungen (A) und (B) in einem molaren Verhältnis von 0,1:1 bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, daß man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion

beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber $NH_2$-Gruppen, bei denen zwei reaktive H-Atome am selben Stickstoffatom sitzen. Hier werden sinnvollerweise innerhalb der funktionellen Gruppe $NH_2$ die beiden Wasserstoffatome als reaktive Gruppe betrachtet, so dass die funktionelle Gruppe $NH_2$ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C). Die Epoxidzahl (%EpO) des Zwischenproduktes liegt vorzugsweise unterhalb von 10% EpO, insbesonder unterhalb von < 5% EpO. Die Definition der Epoxidzahl und die Einzelheiten der analytischen Bestimmung können dem Beispielteil dieser Anmeldung entnommen werden.

Zur Herstellung des Härters

Zur Herstellung des Härters wird wie schon gesagt das Zwischenprodukt mit einem Polyamin (E) diethylentriamin umgesetzt.

In einer Ausführungsform setzt man das Zwischenprodukt und das Polyamin (E) in solchen Mengen ein, daß das Äquivalentverhältnis der reaktiven H-Atome an den A-minostickstoffatomen von (E) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuß vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

Herstellung von Beschichtungsmassen

Ein weiterer Gegenstand der Erfindung ist ein Verfahren zur Herstellung von Klarlacken, Beschichtungsmassen und dergleichen, die erhältlich sind, indem man die oben genannten erfindungsgemäßen Härter in wässrigem Milieu unter Rühren mit Epoxidverbindungen (F) zusammengibt und umsetzt.

Bei den Epoxidverbindungen (F) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1, 1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (F) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (F) verwendet werden, die man durch die Umsetzung von Epichlorhydrin oder ähnlichen E-poxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind

Adipinsäurediglycidylester, Phthalsäurediglycidylester und Hexahydrophthalsäurediglycidylester.

Es können auch Mischungen von mehreren Epoxidverbindungen (F) verwendet werden.

Bei der Herstellung von Beschichtungsmassen, bei der man wie oben gesagt die erfindungsgemäßen Härter in wässrigem Milieu mit Epoxidverbindungen (F) umsetzt, können im übrigen zusätzlich dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

Bezüglich der Schichtdicke der Beschichtungsmassen gilt, dass die erfindungsgemäßen Härter in Überzugsmassen für Schichtdicken von 0,01 bis 10 mm genutzt werden können, vorzugsweise für Schichtdicken von 0,05 bis 3 mm.

Im übrigen gilt, dass die durch den Einsatz der erfindungsgemäß einzusetzenden Härter erzielte äußerst geringe Schrumpfungsneigung der ausgehärteten Massen tendenziell noch dadurch verstärkt werden kann, dass man einen hohen Pigmentgehalt einstellt.

Ein weiterer Gegenstand der Erfindung sind die ausgehärteten Massen, die erhältlich sind, indem man die oben genannten erfindungsgemäßen Härter in wässrigem Milieu mit Epoxidverbindungen (F) umsetzt und anschließend aushärten läßt.

In einer Ausführungsform handelt es sich bei den ausgehärteten Massen um Fußbodenbeschichtungen. In einer bevorzugten Ausführungsform weisen diese Fußbodenbeschichtungen mit einer Schichtdicke von mehr als 0,4 mm einen Längsschrumpf von weniger als 3% auf (gemessen bei 23 °C und einer relativen Luftfeuchtigkeit von 50%).

## Beispiele

### Meßmethoden

### Epoxidzahl (%EpO)

Zur Charakterisierung des Gehalts von Verbindungen an Oxirangruppen ("Epoxidgruppen") wurde eine Epoxidtitration durchgeführt. Die dabei erhaltene Epoxidzahl (%EpO) gibt an, wieviel Gramm Oxiran-Sauerstoff in 100 Gramm einer Probe enthalten sind.

Der Titration liegt folgendes Prinzip zu Grunde: Man fügt eine Lösung mit überschüssigem Tetraethylammoniumbromid zur Probe, die Oxiranringe enthält. Danach titriert man die Mischung mit einer Lösung von Perchlorsäure in Eisessig, wobei eine äquimolare Menge Bromwasserstoff freigesetzt wird. Der Bromwasserstoff reagiert unter Ringöffnung mit den Oxiranringen und bildet das entsprechende Bromhydrin.

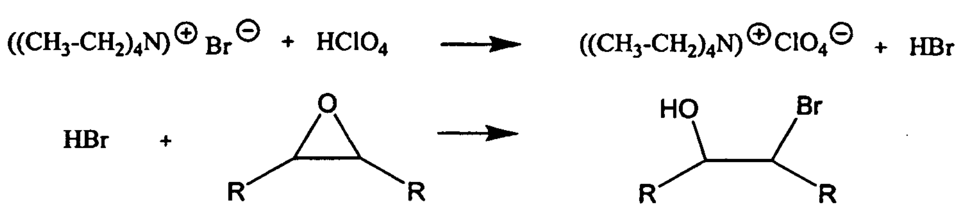

Als Indikator setzt man Kristallviolett ein. Die Bestimmung setzt die Abwesenheit von Wasser, Basen und Aminen voraus.

Es kamen folgende Reagentien zum Einsatz: (1) 0,1-N-Perchlorsäure (Fa. Merck) in Eisessig; (2) Tetraethylammoniumbromid (Fa. Fluka) in Form einer Lösung von 100 g Tetraethylammoniumbromid in 400 ml Eisessig; (3) Kristallviolett (Fa. Merck); zur Herstellung der Indikatorlösung wurden 0,2 g Kristallviolett in 100 ml Eisessig gelöst.

Durchführung: 0,2 bis 0,5 g der Probe, die Oxiranringe enthält werden in einem Erlenmeyerkolben vorgelegt. Die Probe wird in 50 ml wasserfreiem Aceton gelöst. Dann fügt man 10 ml Tetraethylammoniumbromidlösung (siehe oben) und 3 Tropfen Kristallviolettlösung (siehe oben) hinzu. Die Mischung wird mit einer 0,1-N Lösung von Perchlorsäure in Eisessig titriert. Der Endpunkt ist erreicht, sobald die Farbe sich von blau nach grün ändert.

Vor Durchführung der eigentlichen Titration führt man eine Blindprobe durch (diese enthält keine Oxiranverbindung), um Meßfehler auszuschließen.

Auswertung: Der Epoxidgehalt %EpO wird wie folgt berechnet:

$$\% EpO = [(a - b) * 0{,}160] / E$$

a : = Milliliter 0,1 n $HClO_4$ Lösung, die zur Titration benötigt wird
b : = Milliliter 0,1 n $HClO_4$ Lösung, die im Blindversuch benötigt wird
E : = Einwaage der Probe in Gramm

**Epoxidäquivalentgewicht (EEW)**

Das Epoxyäquivalentgewicht (EEW) kann aus der Epoxidzahl wie folgt berechnet werden:

$$16 * 100 / \% EpO = EEW$$

Die Dimension des EEW ist g/äq.

**Abkürzungen**

Im Folgenden bedeuten:

- EEW das Epoxidäquivalentgewicht (wie oben beschrieben).
- MW das mittlere Molekulargewicht

**Beispiel 1**

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.
Es wurden 205,6g einer klaren bernsteinfarbigen Flüssigkeit erhalten mit einer Viskosität (in Substanz, Brookfield, 10Upm, 40°C) von 2140 mPas und einer Aminzahl von 134.

**Beispiel 2**

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 9 Stunden gerührt, bis die Epoxidzahl 3,81% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.
Es wurden 202,3g einer klaren bernsteinfarbigen Flüssigkeit erhalten mit einer Viskosität (in Substanz, Brookfield, 10Upm, 40°C) von 2110 mPas.

**Beispiel 3**

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 5 Stunden gerührt,

bis die Epoxidzahl 4,12% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 90,5g Wasser versetzt.
Es wurden 209,2g einer klaren braungelben Flüssigkeit erhalten mit einer Viskosität (in Substanz, Brookfield, 10Upm, 40°C) von 1440 mPas.

**Beispiel 4**

34,4g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A, 8,9g Butandioldiglycidylether (EEW: 132) und 0,1g Triphenylphosphin gemischt. Die so erhaltene Mischung wurde auf 160°C erhitzt und bei dieser Temperatur über 2 Stunden gerührt bis ein Epoxidwert von 4,39 % erhalten wurde. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 91,7g Wasser versetzt.
Es wurden 211,9g einer klaren, hellgelben Flüssigkeit erhalten mit einer Viskosität (in Substanz, Brookfield, 10Upm, 40°C)von 2500 mPas.

**Beispiel 5**

34,4g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A, 10,7g Hexandioldiglycidylether (EEW: 159,1) und 0,1g Triphenylphosphin gemischt. Die so erhaltene Mischung wurde auf 160°C erhitzt und bei dieser Temperatur über 2 Stunden gerührt bis eine Epoxidzahl von 4,37 % erhalten wurde. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 93,0g Wasser versetzt.
Es wurden 215,1g einer klaren, hellgelben Flüssigkeit erhalten mit einer Viskosität (in Substanz, Brookfield, 10Upm, 40°C) von 2080 mPas.

**Vergleichsbeispiel 1**

27,0g Polypropylenoxidmonoamin (Jeffamine M 600 der Fa. Huntsmann, MW: 600) wurden bei 20 Grad Celsius mit 4,4g Monoaminopolyethylenoxid (Jeffamine M 2070 der Fa. Huntsman, MW: 2000), 46,2g Bisphenol-A-diglycidylether (Chemres E20 der Fa. Cognis EEW: 194), 14,0g Bisphenol A, 42,9g Butandioldiglycidylether (EEW: 132) und 0,1g Triphenylphosphin gemischt. Die so erhaltene Mischung wurde auf 160°C erhitzt und bei dieser Temperatur über 2 Stunden gerührt bis eine Epoxidzahl von 4,53 % erhalten wurde. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 116,0g Wasser versetzt.
Es wurden 266,8g einer klaren, bernsteinfarbenen Flüssigkeit erhalten mit einer Viskosität (in Substanz, Brookfield, 10Upm, 40°C) von 2100 mPas.

**Anwendungstechnische Prüfungen**

**1. Klarlackeigenschaften**

Die Härter gemäß den Beispielen 1 bis 5 (Härter 60%ig in Wasser) und gemäß dem Vergleichsbeispiel 1 (Härter 60%ig in Wasser) wurden durch Mischen der in Tabelle 1 angegebenen Mengen der Komponenten Nr. 1 bis 3 (die

Numerierung der eingesetzten Komponenten Nr. 1 bis 3 ist der ersten Spalte der Tabelle 1 zu entnehmen) zu einem Klarlack formuliert.
Hierzu wurden die Komponenten Nr. 1 (Epoxidharz) und Nr. 2 (Härter 60%ig in Wasser) unter manuellem Rühren mit einem Holzspatel in einem Becherglas mit der Komponente 3 (Wasser) innig vermengt bis eine homogene Emulsion entstanden war. Die Emulsion wurde anschließend mit einem Rakel (0,1 mm) auf einer Glasscheibe aufgetragen und bei 20 Grad Celsius aushärten gelassen. Nach einem und nach sieben Tagen wurde jeweils die Pendelhärte nach König (DIN 53157) mit einem Pendelhärte-Meßgerät (Typ 299, Erichsen) bestimmt.
In allen Fällen war ein Ende des Verarbeitungszeit durch einen deutlichen Anstieg der Viskosität der Emulsion auf den mehr als 3-fachen Wert der Anfangsviskosität erkennbar. Die Verarbeitungszeit betrug ca. 60 Minuten in allen Fällen. Die erhaltenen Lacke waren klar und farblos. Die Tack-free Zeit (Zeit nach der kleine Glaskugeln oder Glasstaub nicht mehr auf dem Film haften, siehe hierzu auch die Angaben im Beschreibungsteil der vorliegenden Anmeldung) betrug in allen Fällen ca. 1 Stunde.

**Tabelle 1: Klarlack-Formulierungen**

| Nr. | Eigenschaften/Versuch | **B1** | **B2** | **B3** | **B4** | **B5** | **V1** |
|---|---|---|---|---|---|---|---|
| | Lack: | | | | | | |
| 1 | Chemres E30 (g) | 10 | 10 | 10 | 10 | 10 | 10 |
| 2 | Härter 60%ig in Wasser (g) | 11,2 | 11,2 | 10,6 | 9,4 | 9,5 | 11,2 |
| 3 | Wasser (g) | 9,1 | 9,0 | 9,0 | 8,5 | 9,5 | 9,0 |
| | | | | | | | |
| | Pendelhärte n. König, nach 1 Tag (0,1 mm Film) | 209 | 204 | 184 | 193 | 191 | 169 |
| | Pendelhärte n. König, nach 7 Tagen (0,1mm Film) | 218 | 211 | 193 | 205 | 202 | 188 |

Die Angaben B1, B2 usw. in der obersten Zeile der Tabelle 1 sind wie folgt zu verstehen:

- B1 bedeutet, dass die Klarlackformulierung gemäß Spalte B1 als Komponente Nr. 2 (Härter) die Verbindung gemäß Beispiel 1 enthielt.
- B2 bedeutet, dass die Klarlackformulierung gemäß Spalte B2 als Komponente Nr. 2 (Härter) die Verbindung gemäß Beispiel 2 enthielt.
- B3 bedeutet, dass die Klarlackformulierung gemäß Spalte B3 als Komponente Nr. 2 (Härter) die Verbindung gemäß Beispiel 3 enthielt.
- B4 bedeutet, dass die Klarlackformulierung gemäß Spalte B4 als Komponente Nr. 2 (Härter) die Verbindung gemäß Beispiel 4 enthielt.
- B5 bedeutet, dass die Klarlackformulierung gemäß Spalte B5 als Komponente Nr. 2 (Härter) die Verbindung gemäß Beispiel 5 enthielt.
- V1 bedeutet, dass die Klarlackformulierung gemäß Spalte V1 als Komponente Nr. 2 (Härter) die Verbindung gemäß Vergleichsbeispiel 1 enthielt.

Die Angaben in den Spalten B1, B2 usw. sind in Bezug auf die eingesetzten Komponenten Mengenangaben in Gramm.

## 2. Fußbodenüberzugsmasse zur Ermittlung des Schrumpfwertes

Die Härter gemäß den Beispielen 1 bis 5 (Härter 60%ig in Wasser) und gemäß dem Vergleichsbeispiel 1 (Härter 60%ig in Wasser) wurden entsprechend den in Tabelle 2 angegebenen Mengen mit den flüssigen Komponenten (Komponenten Nr. 6, 7, 8, 9, und 10) versetzt und am Pendraulik-Rührer homogenisiert. Anschließend wurden die Pigmente (Komponenten Nr. 2, 3, 4, 5 und 11) nacheinander homogen eingerührt und ca. 20 Minuten mittels Pendraulik-Rührer dispergiert.
Anschließend wurde die Mischung mit den Komponente Nr. 12 und Nr. 13 versetzt und ca. 4 Minuten mittels Pendraulik-Rührer homogenisiert.
Die Numerierung der in den Rezepturen eingesetzten Komponenten Nr. 1 bis Nr. 13 ist der ersten Spalte der Tabelle 2 zu entnehmen.

Als Komponente 6 wurde Foammaster 223 eingesetzt. Dabei handelt es sich um einen Entschäumer (Fa. Cognis).
Als Komponente 7 wurde Loxanol DPN eingesetzt. Dabei handelt es sich um einen Offenzeitverlängerer (Fa. Cognis).
Als Komponente 8 wurde Dowanol TPM eingesetzt. Dabei handelt es sich um ein Hilfslösemittel (Fa.Cognis).
Als Komponente 9 wurde DSX 1550 eingesetzt. Dabei handelt es sich um ein Verdickungsmittel (Fa.Cognis).
Als Komponente 12 wurde Chemres E95 eingesetzt. Dabei handelt es sich um Epoxidharz (Fa.Cognis).

In sämtlichen Fällen wurde ein konstantes Verhältnis Füllstoff zu Bindemittel von 4,2 : 1 eingestellt. Die so erhaltene Fußbodenbeschichtungsformulierung wurde zur Messung des Längenschrumpfes in eine vorgefertigten Teflonform (Länge: 150mm, Breite: 20mm, Tiefe 3mm) gegossen und bei 23°C und 50% rel. Luftfeuchte im Klimaschrank aushärten gelassen. Der Längenschrumpf wurde mittels einer Schieblehre nach 7, nach 14 und nach 28 Tagen bestimmt und in %-Abnahme bezogen auf die ursprüngliche Länge von 150 mm angegeben.

**Tabelle 2: Schrumpfwert von Fußbodenüberzugsmassen**

| **Nr.** | **Bestandteile / Beispiel** | **B1** | **B2** | **B3** | **B4** | **B5** | **V1** |
|---|---|---|---|---|---|---|---|
| **1** | **Härter** 60%ig in Wasser | 21,8 | 21,8 | 21,2 | 19,7 | 19,7 | 21,8 |
| **2** | Heucosin-Grau G 1978 | 9,5 | 9,5 | 9,5 | 9,5 | 9,5 | 9,5 |
| 3 | Schwerspat C 14 | 16,3 | 16,3 | 16,3 | 16,3 | 16,3 | 16,3 |
| 4 | Minex S20 | 16,3 | 16,3 | 16,3 | 16,3 | 16,3 | 16,3 |
| 5 | Bentone EW | 2,0 | 2,0 | 2,0 | 2,0 | 2,0 | 2,0 |
| 6 | Foammaster 223 | 0,3 | 0,3 | 0,3 | 0,3 | 0,3 | 0,3 |
| 7 | Loxanol DPN | 0,6 | 0,6 | 0,6 | 0,6 | 0,6 | 0,6 |
| 8 | Dowanol TPM | 0,6 | 0,6 | 0,6 | 0,6 | 0,6 | 0,6 |
| 9 | DSX 1550 | 0,3 | 0,3 | 0,3 | 0,3 | 0,3 | 0,3 |
| 10 | Wasser | 10,0 | 10,0 | 10,0 | 10,0 | 10,0 | 10,0 |
| | **Summe Base-Paint** | **77,8** | **77,8** | **77,1** | **75,7** | **75,7** | **77,8** |
| | | | | | | | |
| 11 | Quarzsand | 100g | 100 | 100 | 100 | 100 | 100 |
| | **Summe** | **177,8** | **177,8** | **177,1** | **175,7** | **175,7** | **177,8** |
| | | | | | | | |
| 12 | Chemres E95 (EEW:190) | 20,7 | 20,7 | 21,2 | 22,0 | 22,0 | 20,7 |
| 13 | Wasser | 10,5 | 10,5 | 10,7 | 11,3 | 11,3 | 10,5 |
| | **Gesamtsumme** | **209,0** | **209,0** | **209,0** | **209,0** | **209,0** | **209,0** |
| | | | | | | | |
| | % Wasser in der Rezeptur | 14,0 | 14,0 | 14,0 | 14,0 | 14,0 | 14,0 |
| | Summe Füllstoffe (Nr. 2,3,4,5) | 142,2 | 142,2 | 142,2 | 142,2 | 142,2 | 142,2 |
| | Summe Bindemittel (Summe aus Nr. 1 ohne Wasser und Nr. 12) | 33,8 | 33,8 | 33,8 | 33,8 | 33,8 | 33,8 |
| | Verhältnis von Füllstoff : Bindemittel | 4,2 | 4,2 | 4,2 | 4,2 | 4,2 | 4,2 |
| | | | | | | | |
| | Schrumpf nach 7 Tagen (% ) | 0,0 | - | 0,4 | 0,00 | 0,00 | 0,07 |
| | Schrumpf nach 14 Tagen (%) | 0,13 | 0,27 | 0,4 | 0,47 | 0,27 | 3,46 |
| | Schrumpf nach 28 Tagen (%) | 0,13 | 0,27 | 0,47 | 0,47 | 0,40 | 4,79 |

Die Angaben B1, B2 usw. in der oberen Zeile der Tabelle 1 sind analog zum Gebrauch bei Tabelle 1 zu verstehen:

- B1 bedeutet, dass die Klarlackformulierung gemäß Spalte B1 als Komponente Nr. 1 (Härter) die Verbindung gemäß

Beispiel 1 enthielt. B2 bedeutet, dass die Klarlackformulierung gemäß Spalte B2 als Komponente Nr. 1 (Härter) die Verbindung gemäß Beispiel 2 enthielt. Usw.

Die Angaben in den Spalten B1, B2 usw. sind in Bezug auf die eingesetzten Komponenten und den Bilanzierungszeilen ("Summe Base Paint", "Summe" und "Gesamtsumme") Mengenangaben in Gramm.

Darüber hinaus wurden bei der Rezeptur gemäß Spalte B1 der Tabelle 2 folgende Daten gemessen:

a) Der (Längs-)Schrumpf bei 8°C und 70% rel. Luftfeuchtigkeit: Dieser Schrumpf betrug nach 7 Tagen 1,7% und nach 28 Tagen 2,1%.
b) Die Shore D Härte (gemessen nach DIN 53505 bei 8°C und 70% rel. Luftfeuchtigkeit): Sie betrug nach 3 Tagen 52, nach 4 Tagen 61, nach 7 Tagen 74 und nach 28 Tagen 87.

## Patentansprüche

**1.** Verwendung von Härtern für wasserbasierte Epoxidharzsysteme, wobei diese Härter erhältlich sind, indem man eine Mischung von

(A) mindestens einem epoxidierten Polypropylenoxid,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F

zu einem Zwischenprodukt umsetzt und dieses Zwischenprodukt anschließend mit Diethylentriamin (E) umsetzt, zur Herstellung von Klarlacken, Beschichtungsmassen und dergleichen mit geringer Schrumpfungsneigung.

**2.** Verwendung nach Anspruch 1, wobei man als Verbindungen (B) Bisphenol-A-Epoxide einsetzt.

**3.** Verwendung nach Anspruch 1 oder 2, wobei man als Verbindung (C) Bisphenol-A einsetzt.

**4.** Verfahren zur Herstellung von Klarlacken, Beschichtungsmassen und dergleichen, die erhältlich sind, indem man Härtern, die erhältlich sind, indem man eine Mischung von

(D) mindestens einem epoxidierten Polypropylenoxid,
(E) mindestens einer epoxidierten aromatischen Hydroxyverbindung ausgewählt aus der Gruppe der Bisphenol-A-Epoxide und der Bisphenol-F-Epoxide und
(F) mindestens einer aromatischen Hydroxyverbindung, ausgewählt aus der Gruppe Bisphenol-A und Bisphenol-F
zu einem Zwischenprodukt umsetzt und dieses Zwischenprodukt anschließend mit Diethylentriamin (E) umsetzt, in wässrigem Milieu mit Polyepoxiden (F) umsetzt.

**5.** Ausgehärtete Massen, erhältlich durch das Verfahren gemäß Anspruch 4.

**6.** Ausgehärtete Massen nach Anspruch 5, wobei es sich um Fußbodenbeschichtungen handelt.

**7.** Fußbodenbeschichtungen nach Anspruch 6, wobei diese Fußbodenbeschichtungen bei einer Schichtdicke von mehr als 0,4 mm einen Längsschrumpf von weniger als 3% aufweisen (gemessen bei 23 °C und einer relativen Luftfeuchtigkeit von 50%).

## Claims

**1.** Use of hardeners for water-based epoxy resin systems, these hardeners being obtainable by reacting a mixture of

(A) at least one epoxidized propylene oxide,
(B) at least one epoxidized aromatic hydroxy compound selected from the group of bisphenol A epoxides and bisphenol F epoxides and

(C) at least one aromatic hydroxy compound selected from the group of bisphenol A and bisphenol F

to form an intermediate product and subsequently reacting this intermediate product with diethylenetriamine (E), for production of clear lacquers, coating compositions and the like having a low tendency to shrink.

**2.** Use as claimed in claim 1, wherein bisphenol A epoxides are used as the compounds (B).

**3.** Use as claimed in claim 1 or 2, wherein bisphenol A is used as the compound (C).

**4.** A process for the production of clear lacquers, coating compositions and the like obtainable by reacting hardeners obtainable by reacting a mixture of

(D) at least one epoxidized polypropylene oxide,
(E) at least one epoxidized aromatic hydroxy compound selected from the group of bisphenol A epoxides and bisphenol F epoxides and
(F) at least one aromatic hydroxy compound selected from the group of bisphenol A and bisphenol F

to form an intermediate product and subsequently reacting this intermediate product with a polyamine (E), with polyepoxides (F) in an aqueous medium.

**5.** Cured compositions obtainable by the process claimed in claim 4.

**6.** Cured compositions as claimed in claim 5 which are floor coating compositions.

**7.** Floor coating compositions as claimed in claim 6, wherein these floor coating compositions have a longitudinal shrinkage of less than 3% in a layer thickness of more than 0.4 mm (as measured at 23°C/50% relative air humidity).

## Revendications

**1.** Utilisation de durcisseurs pour systèmes de résine d’époxyde à base d’eau, ces durcisseurs pouvant être obtenus en ce qu’on transforme un mélange de

(A) au moins un poly(oxyde de propylène) époxydé,
(B) au moins un composé hydroxy aromatique époxydé choisi dans le groupe des époxydes de bisphénol A et des époxydes de bisphénol F et
(C) au moins un composé hydroxy aromatique choisi dans le groupe du bisphénol A et du bisphénol F en un produit intermédiaire et on transforme ensuite ce produit intermédiaire avec de la diéthylènetriamine (E),

pour la préparation de laques claires, de masses de revêtement et analogues avec une faible tendance au retrait.

**2.** Utilisation selon la revendication 1, en utilisant comme composés (B) des époxydes de bisphénol A.

**3.** Utilisation selon la revendication 1 ou 2, en utilisant comme composé (C) du bisphénol A.

**4.** Procédé pour la préparation de laques claires, de masses de revêtement et analogues, qui peuvent être obtenues en ce qu’on transforme des durcisseurs, qui peuvent être obtenus en ce qu’on transforme un mélange de

(D) au moins un poly(oxyde de propylène) époxydé,
(E) au moins un composé hydroxy aromatique époxydé choisi dans le groupe des époxydes de bisphénol A et des époxydes de bisphénol F et
(F) au moins un composé hydroxy aromatique choisi dans le groupe du bisphénol A et du bisphénol F en un produit intermédiaire et on transforme ensuite ce produit intermédiaire avec de la diéthylènetriamine (E),

en milieu aqueux avec des polyépoxydes (F).

**5.** Masses durcies pouvant être obtenues par le procédé selon la revendication 4.

6. Masses durcies selon la revendication 5, où il s'agit de revêtements de sol.

7. Revêtements de sol selon la revendication 6, ces revêtements de sol présentant, à une épaisseur de couche de plus de 0,4 mm, un retrait longitudinal inférieur à 3% (mesuré à 23°C et à une humidité relative de l'air de 50%).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4608405 A